# EUROPEAN PATENT APPLICATION

(11) **EP 4 461 454 A1**
(43) Date of publication of application: **13.11.2024**
(21) Application number: 24174869.8
(22) Date of filing: 08.05.2024
(51) Int. Cl.: B23K 26/082, B23K 26/361, B23K 26/362, B23K 26/402, B23K 103/00

(54) **REMOVING ELASTOMERS FROM ELECTRONIC DEVICE MANUFACTURING EQUIPMENT USING LASER TECHNOLOGY**

(30) Priority: 11.05.2023 US 202363465563 P; 05.09.2023 US 202363536527 P; 24.04.2024 US 202418644262
(71) Applicant: Applied Materials, Inc., Santa Clara, CA 95054 (US)
(72) Inventor: JOSHI, Gagandeep Singh, Santa Clara, 95054 (US); ZARAGOZA, Ramon, Santa Clara, 95054 (US); VAKILZADEH, Farzad, Santa Clara, 95054 (US); PONNEKANTI, Hari, Santa Clara, 95054 (US); KOSHTI, Sushant S., Santa Clara, 95054 (US)
(74) Representative: Zimmermann & Partner Patentanwälte mbB

(57) **Abstract**

A method includes initializing, by at least one processing device, a set of parameters of an elastomer removal system for removing at least a portion of an elastomer material from a target surface, wherein the elastomer removal system includes laser generation system comprising a carbon dioxide (CO₂) laser, and causing, by the at least one processing device, the elastomer removal system to remove at least the portion of the elastomer material from the target surface in accordance with the set of parameters.

## Description

### TECHNICAL FIELD

Embodiments of the present disclosure relate to electronic device fabrication generally. Particularly, embodiments of the present disclosure relate to removing elastomer material from electronic device manufacturing equipment using laser technology.

### BACKGROUND

An electronic device manufacturing system can be used to process substrates (e.g., wafers) during fabrication of electronic devices. A slit valve acts as a gate or barrier between chambers within the electronic device manufacturing system (e.g., between a processing chamber and a transfer chamber). A slit valve can be associated with a gate structure that allows access to the interior of a chamber for loading and unloading substrates while maintaining a controlled environment. A gate structure is also referred to herein as a gate (e.g., bonded gate). Depending on the application, a gate structure may be designed to prevent the escape of hazardous or toxic materials, maintain a specific pressure or gas atmosphere within the chamber, or prevent contamination of the materials being processed. For example, a processing chamber may be used to deposit materials onto substrates.

### SUMMARY

According to embodiments described herein is a method. The method includes initializing, by at least one processing device, a set of parameters of an elastomer removal system for removing at least a portion of an elastomer material from a target surface, wherein the elastomer removal system includes laser generation system comprising a carbon dioxide (CO₂) laser, and causing, by the at least one processing device, the elastomer removal system to remove at least the portion of the elastomer material from the target surface in accordance with the set of parameters.

According to embodiments described herein is a system. The system includes a memory and a processing device, operatively coupled to the memory, configured to: initialize a set of parameters of an elastomer removal system for removing at least a portion of an elastomer material from a target surface, wherein the elastomer removal system includes laser generation system comprising a carbon dioxide (CO₂) laser, and cause the elastomer removal system to remove at least the portion of the elastomer material from the target surface in accordance with the set of parameters.

According to embodiments described herein is an elastomer removal system. The elastomer removal system includes a laser generation system including a carbon dioxide (CO₂) laser, a laser scanning system, and at least one control system. The at least one control system includes at least one processing device, operatively coupled to a memory, configured to initialize a set of parameters associated with the laser generation system and the laser scanning system for removing at least a portion of an elastomer material from a target surface, to cause the laser generation system to generate a laser beam in accordance with the set of parameters, and to cause the laser scanning system to use the laser beam to generate a beam spot to remove at least the portion of the elastomer material from the target surface in accordance with the set of parameters.

### BRIEF DESCRIPTION OF THE DRAWINGS

The present disclosure is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one.
**FIGS. 1A-1F** are diagrams of example systems including gate structures, in accordance with some embodiments.
**FIGS. 2-3** are block diagrams of example systems that can be used to remove elastomer material using laser technology, in accordance with some embodiments.
**FIGS. 4A-4B** are flowcharts of example methods to remove elastomer material using laser technology, in accordance with some embodiments.
**FIG. 5** is a table showing example laser system parameters used to remove elastomer materials, in accordance with some embodiments.
**FIG. 6** is a block diagram of an example computer system in which implementations of the present disclosure may operate.

### DETAILED DESCRIPTION

Embodiments described herein relate to removing elastomer material using laser technology. A gate structure associated with a slit valve can include a sealing structure disposed on a surface of the gate structure and in contact with a sealing surface of a substrate, which can enable a tight seal to prevent contaminants or particles from entering the processing chamber and interfering with a process (e.g., deposition process). Such a seal can be achieved using the gate structure and actuator force which is part of a slit valve assembly that pushes the gate structure against the sealing surface. For example, a sealing structure can include an O-ring, a gasket, etc.

A sealing structure can be formed from an elastomer. An elastomer is a type of polymer that exhibits elastic behavior. More particularly, an elastomer can stretch or deform when a force is applied to the elastomer, and the elastomer can return to its original shape when the force is removed. Elastomers can have a high degree of flexibility and resistance to impact and/or abrasion. Examples of elastomers include natural rubber, synthetic rubber, silicone, and polyurethane. The properties of elastomers can be modified by changing their material composition and/or manufacturing processes to achieve specific performance characteristics, such as increased durability, temperature resistance, or chemical resistance. For example, an elastomer can be a fluorinated elastomer. Examples of fluorinated elastomers include a fluoroelastomer (FKM), a perfluoroelastomer (FFKM), etc. The presence of fluorine in a fluorinated elastomer can provide greater chemical resistance as compared to non-fluorinated elastomers. FFKMs can exhibit greater chemical and temperature resistance as compared to FKMs due to the greater concentration of fluorine. Accordingly, the type of elastomer material that is used to form the sealing structure can be selected based on the intended environment within which the gate structure will be exposed.

A gate assembly can include the gate structure bonded to a substrate using the sealing structures (e.g., elastomers). For example, the substrate can be a metal substrate. The bonding process can be performed using specialized equipment and techniques to ensure a high-quality seal that can withstand the harsh conditions within the processing chamber. The choice of bonding method may depend on the specific requirements of the application, such as the material of the sealing structure, the substrate material, process conditions, etc.

A sealing structure can be formed within a gate structure by forming an elastomer material within a groove of the gate structure. During the process of forming the sealing structure within the groove, excess elastomer material can form on regions of the gate structure adjacent to the groove. Moreover, during the process of removing a sealing structure from a groove of a gate structure, some material remnants may remain within the groove.

Elastomer material can be removed from the surface of a gate structure using a manual removal method in which a person removes the elastomer material with a suitable tool. Manual removal methods can be heavily dependent on the skill level of the operator. Due at least in part to operator error, manual removal methods can result in decreased yields due to, for example high scrap rate and/or inconsistency in the final product. Moreover, manual removal methods can damage the underlying base material of the gate structure and/or surface finish. Additionally, manual removal methods can be time consuming and labor intensive.

Flash is a term that refers to excess material of a component. For example, flash can be a thin layer of excess material. Deflashing is a term that refers to a flash removal process to remove flash, or excess material, from a component. Deflashing can be done to improve aesthetics and functionality of a component, as well as to ensure that the component meets specifications. Excess elastomer material, as flash, can be removed from the surface of a gate structure using a manual deflashing method in which a person cuts or scrapes away flash using a suitable tool. Manual deflashing methods can be heavily dependent on the skill level of the operator. Due at least in part to operator error, manual deflashing methods can result in decreased yields due to, for example high scrap rate and/or inconsistency in the final product. Additionally, manual deflash methods can be time consuming and labor intensive.

Additionally, gate structures (e.g., bonded gates) in slit valves made of elastomer materials can require frequent replacement due to wear during semiconductor manufacturing processes. Frequent replacement of gate structures can incur significant replacement costs for manufacturers and can negatively affect semiconductor substrate yield and overall manufacturing efficiency. However, gate structures are generally not reused and are discarded.

To address these and other drawbacks, embodiments described herein include systems and methods that can be used for removing elastomer material from target surfaces using laser technology. Embodiments described herein can utilize a laser-based automatic method to efficiently remove (e.g., deflash and/or fully remove) elastomer material from electronic device manufacturing equipment, such as gate structures, with enhanced accuracy, precision, throughput and/or cost-effectiveness as compared to manual methods. By reducing or eliminating operator error, embodiments described herein can increase yield rate by reducing scrap rates and/or increasing consistency in the final product.

Embodiments described herein can remove at least a portion of an elastomer material formed on a target surface to reduce or eliminate contamination without damaging the underlying base material of the target surface (e.g., metal). The laser-based automatic method can be applied to various types of elastomer materials and base materials of the gate structure (e.g., stainless steel or aluminum) with various types of surface profiles. This versatility can make laser-based automatic methods suitable for use across a wide range of semiconductor device processing applications, manufacturing setups and/or processing chambers.

By reducing or eliminating contamination caused by elastomer residues, embodiments described herein can enable reusability of electronic device manufacturing equipment, such as gate structures (even within grooves), and can extend the performance life of such electronic device manufacturing equipment. By doing so, embodiments described herein can be used to reduce replacement costs by extending the lifespan of electronic device manufacturing equipment, increase substrate yield, improve manufacturing efficiency, and reduce operational expenses for manufacturers. Additionally, by enabling reusability of electronic device manufacturing equipment, embodiments described herein can reduce the generation of waste products, such as elastomer waste. Accordingly, embodiments described herein can positively contribute to environmental sustainability.

An elastomer removal system described herein can include a laser generation system including a laser to generate a laser beam (i.e., light). In some embodiments, the laser is a gas laser. A gas laser is a type of laser that uses a gas (or gas mixture) as an active medium to generate a laser beam within a laser cavity. The gas (or gas mixture) can be provided by a gas supply system. The gas supply system can provide a constant, stable flow of the gas mixture to maintain optimal operation. The laser beam is generated when the gas (or gas mixture) is excited by an electric discharge, which causes gas molecules to vibrate and emit photons to generate light. The light can be amplified by focusing the light, such as by bouncing the light back and forth between mirrors. The laser beam generated by the laser is made up of light rays. To create a more focused laser beam, the laser generation system can further include a collimator that can receive a laser beam generated by the laser, and collimate the laser beam to generate a collimated laser beam. Collimation refers to the process of parallelizing the light rays of the laser beam. For example, the collimator can include an optical element configured to collimate the laser beam, such as a collimating lens.

In some embodiments, a gas laser is a carbon dioxide (CO₂) laser that uses CO₂ as the active medium to generate the laser beam. CO₂ lasers can exhibit excellent absorption properties in elastomer materials, while exhibiting limited absorption properties in most metals that can be included in the base material of the gate structure (e.g., stainless steel or aluminum). As a result, the base material of the gate structure can remain relatively unaffected by the CO₂ laser to maintain gate structure integrity. In some embodiments, a CO₂ laser uses a gas mixture include CO₂, nitrogen (N₂) and helium (He) to generate the laser beam.

The elastomer removal system can further include a laser scanning system that can controllably deflect or otherwise direct the laser beam (e.g., collimated laser beam) generated by the laser generation system onto a target surface (e.g., surface of an elastomer of a gate structure). For example, the laser scanning system can control the direction and/or intensity of the laser beam received from the laser generation system, and generate a beam spot incident on the target surface having a target beam spot size. In some embodiments, the laser scanning system is a galvanometer scanning system. A galvanometer scanning system is a mirror-based scanning system, including at least two galvanometer mirrors, that are used to steer the laser beam rapidly and precisely in at least two degrees of freedom (e.g., horizontal direction and vertical direction) across the target surface, allowing it to move quickly and accurately across the surface to remove elastomer material from the target surface. For example, the galvanometer scanning system can include a galvo scan head. The galvanometer mirrors can be mounted on a small motor controllable by a controller. In some embodiments, the galvanometer scanning system includes an f-theta lens. An f-theta lens is a lens that create a flat field of focus with a constant magnification over a specific scan angle. The term "f-theta" refers to the mathematical relationship between the distance from the lens to the focus point, or focal point (i.e., "f") and the angle of incidence of the laser beam (i.e., "theta"). An f-theta lens can include any suitable material. For example, an f-theta lens can be formed from a material that has properties to enable high laser scanning quality and precision, such as high refractive index and/or low dispersion. In some embodiments, an f-theta lens includes an optical glass material. Examples of optical glass materials include fused silica, borosilicate glass, etc. In some embodiments, an f-theta lens includes a plastic material.

Upon incidence on an elastomer, the beam spot generated by the laser scanning system can vaporize the elastomer and separate it from the target surface. In some embodiments, a direct laser writing technique is employed. Direct laser writing, also referred to as direct laser lithography or multiphoton lithography, is a technique that controls the intensity and/or focus of a laser beam to selectively expose and develop a photoresist material. By controlling the intensity and/or focus of the laser beam, the material can be selectively exposed and developed.

The elastomer removal system can be calibrated to efficiently remove at least a portion of elastomer material from the target surface. For example, a set of parameters can be set and/or adjusted to optimize the laser beam generated by the laser generation system and/or the beam spot generated by laser scanning system to remove elastomer material. For example, the set of parameters can be adjusted based on properties of the elastomer material, such as thickness, material type, etc., the material of the target surface, etc. Thus, embodiments described herein can accurately target diverse elastomer materials on diverse surface materials, encompassing a wide range of surface morphologies and structures (e.g., grooves), as well as surface finishes. The set of parameters can be optimized to achieve various benefits, such as improved product quality, increased production output, reduced energy consumption, minimized material waste, improved process stability, etc. For example, the set of parameters can include at least one of: wavelength, pulse energy, average power, repetition rate, hatch distance, marking speed, milling strategy, optical bench setup, or beam alignment.

Pulse energy refers to the amount of energy of a laser pulse. Pulse energy can be measured in units of joules. If the pulse energy is not high enough, then not enough material (e.g., elastomer) can be removed from the target surface. However, if the pulse energy is too high, then the laser pulse can cause damage and/or heat buildup. The pulse energy can be controlled by various factors, such as power, pulse duration, and pulse frequency. For example, higher-powered lasers and shorter pulse durations can be capable of delivering laser pulses with higher pulse energies. Accordingly, the set of parameters can include a pulse energy selected for optimal removal of elastomers from gate structures.

Repetition rate refers to the number of laser pulses that are emitted by the laser per second. Repetition rate can be measured in units of frequency, such as hertz (Hz) (i.e., pulses per second). Repetition rate can be controlled by various factors, such as pulse duration and the time delay between pulses, also referred to as the pulse repetition interval (PRI). Higher repetition rates can allow for faster processing times and higher production rates, while lower repetition rates may be necessary for more precise or detailed processing. Accordingly, the set of parameters can include a repetition rate selected for optimal removal of elastomers from gate structures in view of processing efficiency.

Marking speed refers to the speed at which the laser beam can create a mark or engraving on a surface. Marking speed can be measured in units of distance per second, such as millimeters (mm) per second (s) (mm/s). The marking speed can depend on various factors, such as laser power, wavelength, the type of material (e.g., type of elastomer), etc. For example, higher-powered lasers with shorter wavelengths can be capable of faster marking speeds, as they can remove material more quickly and efficiently. Accordingly, the set of parameters can include a marking speed selected for optimal removal of elastomers from gate structures.

Hatch distance refers to the distance between laser scan lines in a laser processing pattern. Hatch distance can be used to determine the resolution and/or quality of the processed pattern. Hatch distance can be measured in units of distance per scan line, such as millimeters per line. Hatch distance, and thus resolution and/or quality, can be controlled by the size and shape of the beam spot incident on the target surface, the laser scanning speed, etc. A smaller hatch distance can result in higher resolution and/or quality, but it can also increase processing time and reduce productivity. A larger hatch distance can reduce processing time and increase productivity, but it may also result in lower resolution and/or quality. The optimal hatch distance for a particular application can depends on the type and thickness of the material being processed, the target resolution and/or quality, etc. Accordingly, the set of parameters can include a hatch distance selected for optimal removal of elastomers from gate structures in view of processing efficiency.

Milling strategy refers to the laser milling approach to remove material from a target surface. Examples of milling strategies include raster cutting, vector cutting and hybrid cutting. Raster cutting refers to moving the laser beam back and forth across the target surface in a series of parallel lines. Raster cutting can be used for cutting large areas of material and can result in a smooth, uniform finish. Vector cutting refers to moving the laser beam along a path defined by a vector graphic. Vector cutting can be used for applications that may require higher accuracy and/or precision, such as cutting complex shapes or curves. Hybrid cutting refers to a combination of raster cutting and vector cutting, which can provide some benefits of both individual strategies. For example, the laser beam can follow a path defined by a vector graphic for an exterior region of a target surface (e.g., edges and/or contours), while an interior region of the target surface is cut using a raster cutting approach. This type of hybrid cutting can allow for faster cutting speeds for the bulk of the material located in the interior region, while maintaining high precision and accuracy along the exterior region. Accordingly, the set of parameters can include a milling strategy selected for optimal removal of elastomers from gate structures in view of processing efficiency.

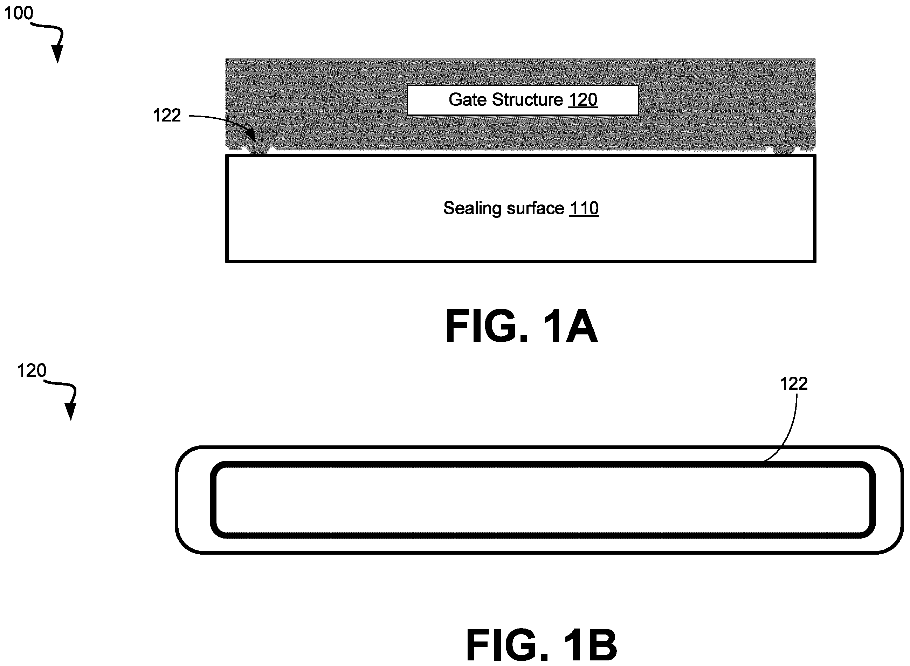

Optical bench setup refers to the configuration of the optical bench used to mount components of the elastomer removal system. Beam alignment refers to the process of accurately positioning and directing the laser beam and/or the beam spot along a target path. Beam alignment can involve multiple steps, such as adjusting the position and orientation of the laser, aligning the optical components that direct the laser beam (e.g., mirrors), and ensuring that the laser beam is focused and has the desired characteristics, such as intensity, polarization, and wavelength. Further details regarding removing elastomer materials using laser technology will now be described below with reference to **FIGS. 1A-5****.**

**FIG. 1A** is a diagram of an example cross-sectional view of system 100, in accordance with some embodiments. System 100 can represent at least a portion of an electronic device manufacturing system including a processing chamber for processing substrates during electronic device fabrication. As shown, system 100 includes sealing surface 110, gate structure 120 having sealing structure 122 disposed on sealing surface 110. In some embodiments, sealing surface 110 is a metal substrate. More specifically, sealing structure 122 can be used to form a seal (e.g., hermetic seal) to prevent contaminants or particles from entering the processing chamber. For example, sealing structure 122 can be bonded to sealing surface 110. More specifically, sealing structure 122 is formed from an elastomer. In some embodiments, sealing structure 122 is formed from a perfluoroelastomer (FFKM). In some embodiments, sealing structure 122 is formed from a fluoroelastomer (FKM).

**FIG. 1B** is a diagram of an example top-down view of gate structure 120 including sealing structure 122.

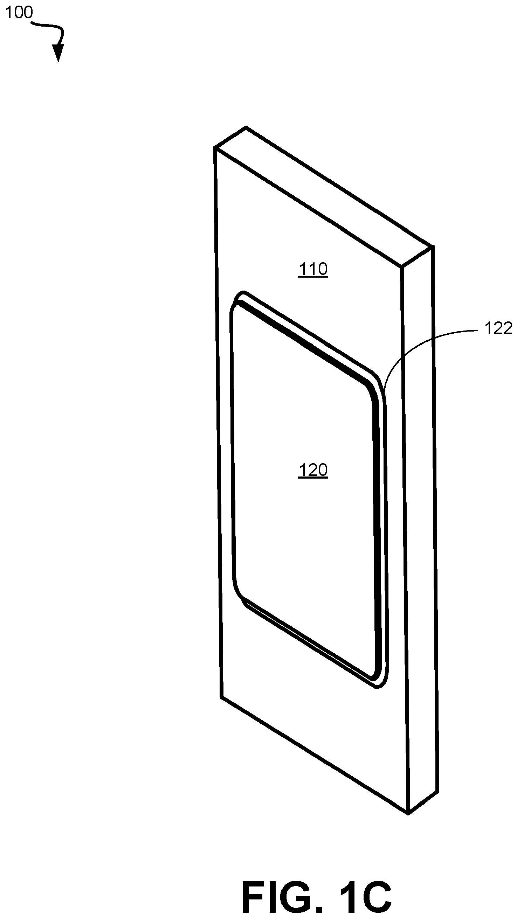

**FIG. 1C** is a diagram of an example perspective view of system 100. For example, sealing structure 122 can be formed within a groove of gate structure 120. The sealing structure 122 can be formed from an elastomer material.

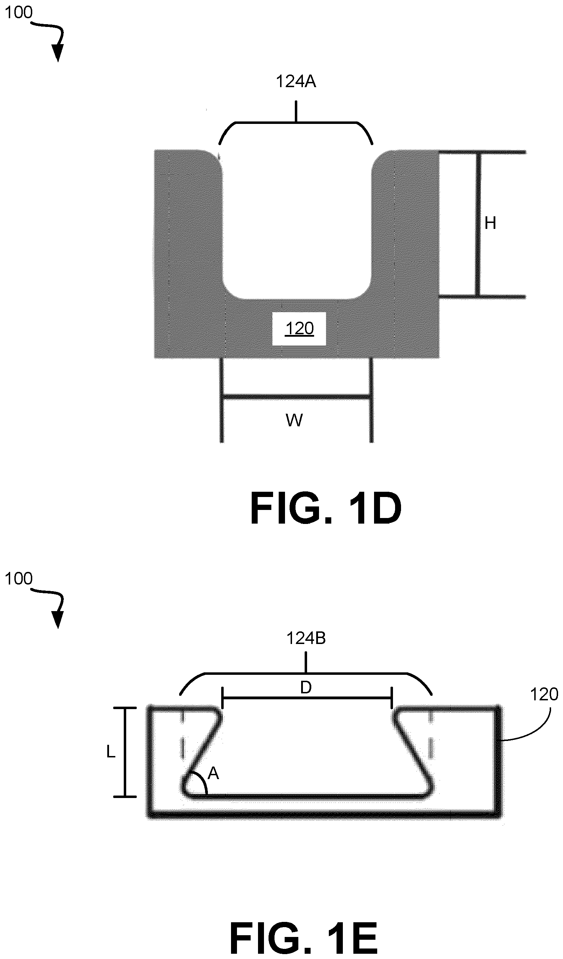

In some embodiments, a groove has a rectangular cross-sectional shape. For example, a rectangular cross-sectional shape can be a rounded rectangular cross-sectional shape. An illustrative example of a groove 124A having a rectangular cross-sectional shape is shown with reference to **FIG. 1D****.** Groove 124A can have width "W" and height "H". In some embodiments, W ranges from about 1 millimeter (mm) to about 8 mm. In some embodiments, H ranges from about 1 mm to about 8 mm.

In some embodiments, a groove has a dovetail cross-sectional shape. An illustrative example of a groove 124B having a dovetail cross-sectional shape is shown with reference to **FIG. 1E****.** Groove 124B can have a width "D", a height "L" and an interior angle "A". In some embodiments, D ranges from about 1 mm to about 10 mm. In some embodiments, L ranges from about 1 mm to about 10 mm. In some embodiments, A ranges from about 45° to about 75°. In some embodiments, A is about 60°.

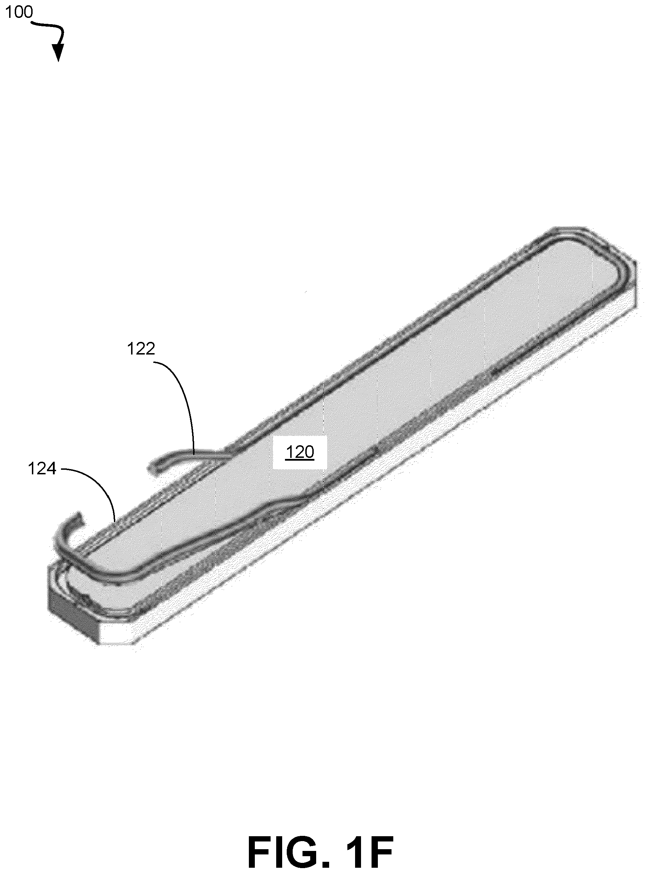

**FIG. 1F** is a diagram of an example perspective view showing the removal of sealing structure 122 from groove 124 of gate structure 120. Groove 124 can have any suitable shape in accordance with embodiments described herein. For example, groove 124 can have a rectangular cross-sectional shape, a dovetail cross-sectional shape, etc.

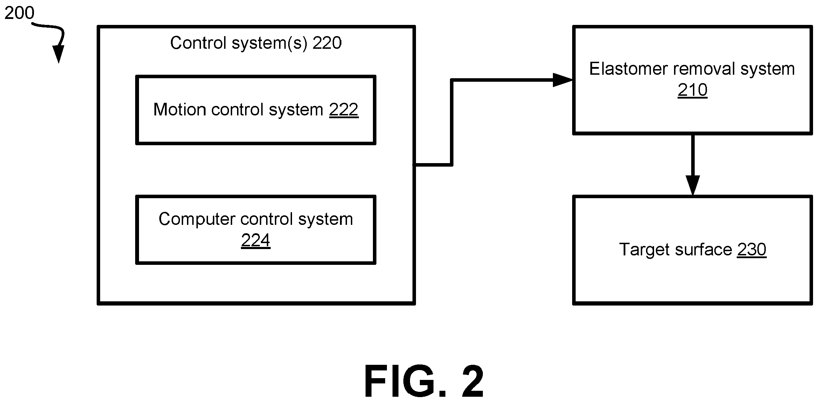

In some embodiments, as will be described in further detail below with reference to **FIG. 2****,** an elastomer removal system can remove at least a portion of sealing structure 122 from groove 124 with little to no damage to sealing surface 110 (e.g., the metal substrate). In some embodiments, the elastomer removal system removes an entirety of sealing structure 122 from groove 124. In some embodiments, the elastomer removal system removes a portion of sealing structure 122 remaining within groove 124. In some embodiments, the elastomer removal system removes excess elastomer material from groove 124 (e.g., deflash). For example, during a process of removing sealing structure 122 from groove 124 (e.g., physical removal process), a portion of sealing structure 122 may remain within groove 124 as elastomer material remnants. The elastomer removal system can then be used to remove excess elastomer material remnants from groove 124.

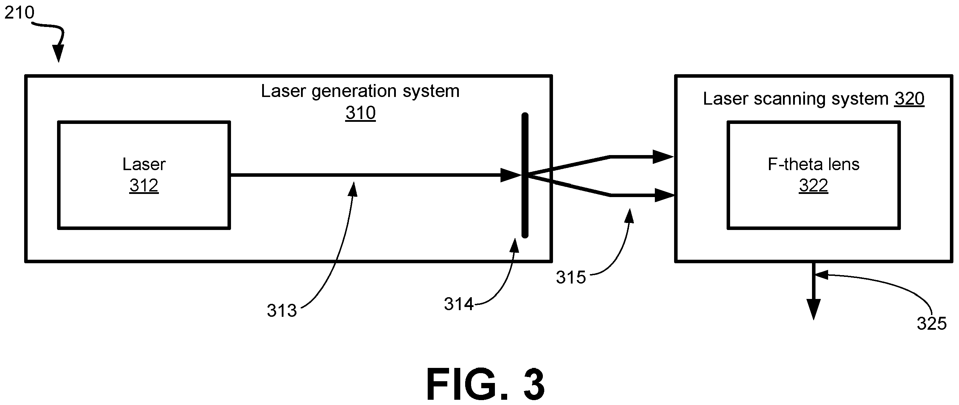

**FIG. 2** is a block diagram of an example system 200, in accordance with some embodiments. As shown, system 200 can include elastomer removal system 210 operatively coupled to set of control systems 220. As will be described in further detail below with reference to **FIG. 3****,** elastomer removal system 210 can include a laser generation system and a laser scanning system. The laser generation system can be used to generate a laser beam (e.g., a collimated beam), and the laser scanning system can be used to generate the beam spot using the collimated beam. The beam spot can vaporize at least a portion of an elastomer material formed on target surface 230 and separate it from target surface 230. For example, target surface 230 can be a surface of elastomer material of electronic device manufacturing equipment. In some embodiments, target surface 230 is a surface of a slit valve and/or gate structure associated with a processing chamber. For example, target surface 230 can be a surface of sealing structure 122 of gate structure 120 of **FIGS. 1A-1F****.**

In some embodiments, elastomer removal system 210 functions as an elastomer deflashing system for removing excess elastomer material, as flash, from target surface 230. For example, elastomer removal system 210 can remove (e.g., deflash) the excess elastomer material (e.g., flash), with little to no damage to an underlying surface (e.g., the metal substrate). In some embodiments, the excess elastomer material is formed as a result of a process of forming a sealing structure within a groove.

In some embodiments, elastomer removal system 210 removes at least a portion of the sealing structure from a groove. In some embodiments, elastomer removal system 210 removes an entirety of the sealing structure from the groove. In some embodiments, elastomer removal system 210 removes a portion of the sealing structure remaining within the groove. For example, during a process of removing the sealing structure from the groove (e.g., physical removal process), a portion of the sealing structure may remain within the groove as elastomer material remnants. Elastomer removal system 210 can then be used to remove the elastomer material remnants from the groove. In some embodiments, the groove is formed within a gate structure associated with a processing chamber.

Set of control systems 220 can include one or more control systems to cause elastomer removal system 210 to generate the beam spot to remove at least a portion of elastomer material from target surface 230 in accordance with a set of parameters. More specifically, set of control systems 220 can control operation of one or more components of system 200 in accordance with a set of parameters.

In some embodiments, set of control systems 220 includes motion control system 222. Motion control system 222 can be used to control the movement of a sample into position for an elastomer removal process. More specifically, motion control system 222 can control the position and/or speed of a moving stage assembly used to hold the sealing surface in place during the elastomer removal process. In some embodiments, set of control system 220 includes computer control system 224. Computer control system 224 can correspond to the same control system as motion control system 222, or can be a separate control system from motion control system 222. Computer control system 224 can be used to control operation of elastomer removal system 210 (e.g., the laser generation system and/or the laser scanning system). More specifically, computer control system 224 can provide control over multiple parameters of the set of parameters, optimization of multiple parameters of the set of parameters, constraint-aware control and/or improved handling over multiple conditions.

In some embodiments, set of control systems 220 initializes the set of parameters. The set of parameters can be initialized during a process to calibrate elastomer removal system 210 to efficiently remove elastomer material from target surface 230. For example, the set of parameters can be set and/or adjusted to optimize the laser beam generated by the laser generation system, and/or optimize the output generated by laser scanning system. For example, the set of parameters can be set and/or adjusted based on the properties of the elastomer material, such as thickness, type of material, etc. The set of parameters can be optimized to achieve various benefits, such as improved product quality, increased production output, reduced energy consumption, minimized material waste, improved process stability, etc. For example, the set of parameters can include at least one of: laser wavelength, laser frequency, pulse energy, laser power, repetition rate, hatch distance, marking or laser scanning speed, effective cutting speed, milling strategy, optical bench setup, or beam alignment.

In some embodiments, the laser is a CO₂ laser having a wavelength that ranges between about 9 microns to about 11 microns. In some embodiments, the laser power ranges from about 50 Watts (W) to about 70W. In some embodiments, the laser frequency ranges from about 100 Hz to about 1000 Hz. In some embodiments, the laser scanning speed ranges from about 50 mm/s to about 1000 mm/s. In some embodiments, the effective cutting speed ranges from about 10 mm/s to about 30 mm/s.

System 200 can further include a set of safety features (not shown) to protect operators and prevent damage to equipment. Examples of safety features include interlocks, warning lights, protective barriers, etc. Further details regarding elastomer removal system 210 will now be described below with reference to **FIG. 3****.**

**FIG. 3** is a block diagram of an example elastomer removal system 210, in accordance with some embodiments. As shown, elastomer removal system 210 can include laser generation system 310 and laser scanning system 320. Laser generation system 310 can include at least one laser 312 to generate laser beam 313. In some embodiments, laser 312 is a gas laser. For example, laser 312 can be a CO₂ laser. Laser beam 313 is made up of light rays. To create a more focused laser beam, laser generation system 310 can further include collimator 314 that can receive laser beam 313 and collimate laser beam 313 to generate collimated beam 315. For example, collimator 314 can include an optical element configured to collimate laser beam 313, such as a collimating lens.

Laser scanning system 320 can controllably deflect collimated beam 315 onto a target surface (e.g., target surface 230 of **FIG. 2**). For example, laser scanning system 320 can control the direction and/or intensity of collimated beam 315, and generate beam spot 325 incident on the target surface having a target beam spot size. In some embodiments, laser scanning system 230 includes a galvanometer scanning system. For example, laser scanning system 230 can include a galvo scan head. In some embodiments, laser scanning system 230 includes f-theta lens 322. F-theta lens 322 can include any suitable material. For example, f-theta lens 322 can be formed from a material that has properties to enable high laser scanning quality and precision, such as high refractive index and/or low dispersion. In some embodiments, f-theta lens 322 includes an optical glass material. Examples of optical glass materials include fused silica, borosilicate glass, etc. In some embodiments, f-theta lens 322 includes a plastic material.

Beam spot 325 can vaporize the elastomer material and separate it from the target surface. In some embodiments, a direct laser writing technique is employed. The direct laser writing technique can control the intensity and/or focus of a laser beam to selectively expose and develop a photoresist material. By controlling the intensity and/or focus of the laser beam, the material can be selectively exposed and developed.

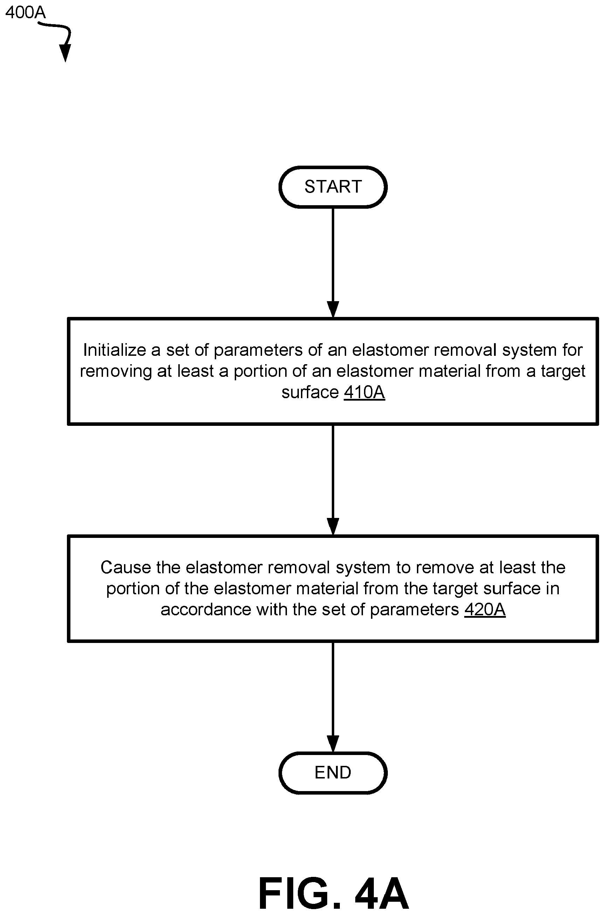

As described above, elastomer removal system 210 can be calibrated to efficiently remove elastomers from the target surface. More specifically, a set of parameters can be set and/or adjusted to optimize the laser beam generated by the laser generation system, and/or optimize the output generated by laser scanning system. The set of parameters can be optimized to achieve various benefits, such as improved product quality, increased production output, reduced energy consumption, minimized material waste, improved process stability, etc. For example, the set of parameters can include at least one of: wavelength, pulse energy, average power, repetition rate, hatch distance, marking speed, milling strategy, optical bench setup, or beam alignment. Further details regarding system 300 are described above with reference to **FIG. 2** and will be described in further detail below with reference to **FIGS. 4A-4B****.**

**FIG. 4A** is a flowchart of an example method 400A to remove elastomer material using laser technology, in accordance with some embodiments. Method 400A can be performed by a system including a processing chamber communicable coupled to a controller that can include hardware (e.g., processing device, circuitry, dedicated logic, programmable logic, microcode, hardware of a device, integrated circuit, etc.), software (e.g., instructions run or executed on a processing device), or a combination thereof. In some implementations, method 400A is performed by one or more components of system 200 of **FIG. 2** (e.g., set of control systems 220). Although shown in a particular sequence or order, unless otherwise specified, the order of the processes can be modified. Thus, the illustrated implementations should be understood only as examples, and the illustrated processes can be performed in a different order, and some processes can be performed in parallel. Additionally, one or more processes can be omitted in various implementations. Thus, not all processes are required in every implementation. Other process flows are possible.

At operation 410A, processing logic initializes a set of parameters of an elastomer removal system for removing at least a portion of an elastomer material from a target surface. In some embodiments, the target surface is a surface of electronic device manufacturing equipment. For example, the target surface can be a surface of a gate structure associated with a processing chamber.

The elastomer removal system can include a laser generation system and a laser scanning system. For example, the laser generation system can include a laser that can generate a laser beam. In some embodiments, the laser is a gas laser. A gas laser is a type of laser that uses a gas as an active medium to generate a laser beam within a laser cavity. The laser beam is generated when the gas is excited by an electric discharge, which causes gas molecules to vibrate and emit photons to generate light. The light can be amplified by focusing the light, such as by bouncing the light back and forth between mirrors. In some embodiments, a gas laser is a CO₂ laser that uses CO₂ as the active medium to generate the laser beam. The laser beam generated by the laser is made up of light rays. To create a more focused laser beam, the laser generation system can further include a collimator that can receive a laser beam generated by the laser, and collimate the laser beam to generate a collimated laser beam. For example, the collimator can include an optical element configured to collimate the laser beam, such as a collimating lens. For example, the laser scanning system can control the direction and/or intensity of the laser beam received from the laser generation system, and generate a beam spot incident on the target surface having a target beam spot size. In some embodiments, the laser scanning system includes a galvanometer scanning system. For example, the laser scanning system can include a galvo scan head. In some embodiments, the laser scanning system includes an f-theta lens. The f-theta lens can include any suitable material. For example, the f-theta lens can be formed from a material that has properties to enable high laser scanning quality and precision, such as high refractive index and/or low dispersion. In some embodiments, the f-theta lens includes an optical glass material. Examples of optical glass materials include fused silica, borosilicate glass, etc. In some embodiments, the f-theta lens includes a plastic material.

The set of parameters can be initiated as part of a process of calibrating the elastomer removal system to efficiently remove elastomer material using a laser beam generated by the laser generation system. More specifically, the set of parameters can be set and/or adjusted to optimize the laser beam generated by the laser generation system, and/or optimize the beam spot generated by the laser scanning system. The set of parameters can be optimized to achieve various benefits, such as improved product quality, increased production output, reduced energy consumption, minimized material waste, improved process stability, etc. For example, the set of parameters can include at least one of: wavelength, pulse energy, average power, repetition rate, hatch distance, marking speed, milling strategy, optical bench setup, or beam alignment.

At operation 420A, processing logic causes the elastomer removal system to remove at least the portion of the elastomer material from the target surface in accordance with the set of parameters. In some embodiments, causing the elastomer removal system to remove at least the portion of the elastomer material from the target surface in accordance with the set of parameters includes causing the elastomer removal system to remove excess material from the target surface (e.g., deflashing).

In some embodiments, causing the elastomer removal system to remove the elastomer material from the target surface in accordance with the set of parameters includes causing the elastomer removal system (e.g., the laser generation system and the laser scanning system) to remove at least a portion of a sealing structure from a groove. In some embodiments, causing the elastomer removal system to remove the elastomer material from the target surface in accordance with the set of parameters comprises causing the elastomer removal system to remove an entirety of the sealing structure from the groove. In some embodiments, causing the elastomer removal system to remove the elastomer material from the target surface in accordance with the set of parameters comprises causing the elastomer removal system to remove a portion of the sealing structure remaining in the groove. For example, the portion of the sealing structure remaining in the groove can include elastomer material remnants that remain after a previous process used to remove the sealing structure (e.g., a physical removal process).

In some embodiments, causing the elastomer removal system to remove elastomer material from a target surface in accordance with the set of parameters can include causing the laser generation system to generate a laser beam toward a collimating lens to generate a collimated beam. Additionally or alternatively, causing the elastomer removal system to remove elastomer material from a target surface in accordance with the set of parameters can include causing the laser scanning system to use the collimated beam to generate a beam spot to remove the elastomer material from the target surface. Upon incidence on the elastomer material, the beam spot generated by the laser scanning system can vaporize the elastomer material and separate it from the target surface. In some embodiments, a direct laser writing technique is employed. By controlling the intensity and/or focus of the beam spot the material can be selectively exposed and developed.

In some embodiments, the gate structure is cleaned and inspected by an operator to remove any contaminants and residues prior to causing the elastomer removal system to remove elastomer material from the target surface. In some embodiments, prior to causing the elastomer removal system to remove elastomer material from the target surface, the elastomer removal system is calibrated and/or aligned by an operator. The calibration and/or alignment can be performed to focus and/or align the laser beam to be generated by the elastomer removal system within the target surface. In some embodiments, after the elastomer removal process, the gate structure is inspected and tested for completeness of elastomer removal and structure integrity. For example, the gate structure can undergo a seal performance test to ensure reliability and/or suitability for reuse. In some embodiments, removed elastomer materials can be collected and recycled to reduce waste.

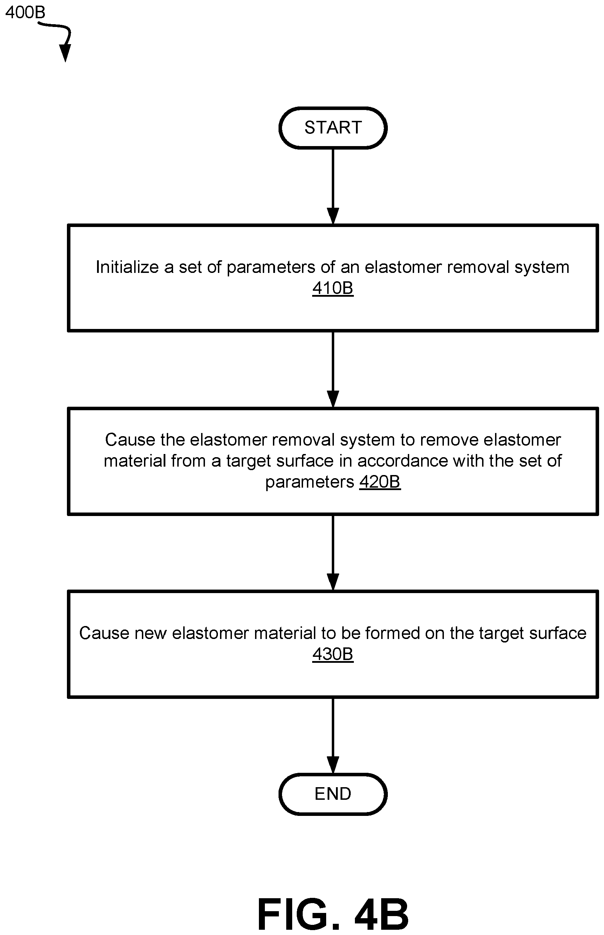

**FIG. 4B** is a flowchart of an example method 400B to remove elastomer material using laser technology, in accordance with some embodiments. Method 400B can be performed by a system including a processing chamber communicable coupled to a controller that can include hardware (e.g., processing device, circuitry, dedicated logic, programmable logic, microcode, hardware of a device, integrated circuit, etc.), software (e.g., instructions run or executed on a processing device), or a combination thereof. In some implementations, method 400B is performed by one or more components of system 200 of **FIG. 2** (e.g., set of control systems 220). Although shown in a particular sequence or order, unless otherwise specified, the order of the processes can be modified. Thus, the illustrated implementations should be understood only as examples, and the illustrated processes can be performed in a different order, and some processes can be performed in parallel. Additionally, one or more processes can be omitted in various implementations. Thus, not all processes are required in every implementation. Other process flows are possible.

At operation 410B, processing logic initializes a set of parameters of an elastomer removal system. Operation 410B may be similar to operation 410A of **FIG. 4A****.**

At operation 420B, processing logic causes the elastomer removal system to remove elastomer material from a target surface in accordance with the set of parameters. For example, the elastomer material can correspond to a sealing structure formed within a groove. Operation 420B may be similar to operation 420A of **FIG. 4A****.**

At operation 430B, processing logic causes new elastomer material to be formed on the target surface. For example, the new elastomer material can correspond to a new sealing structure formed within the groove. That is, the new elastomer material replaces the elastomer material removed at operation 420B. For example, operations 410B-430B can be performed to refurbish electronic device manufacturing equipment (e.g., a gate structure of an electronic device manufacturing system). In some embodiments, causing the new elastomer material to be formed on the target surface further includes causing the elastomer removal system to remove an excess portion of the new elastomer material (e.g., flash) from the target surface.

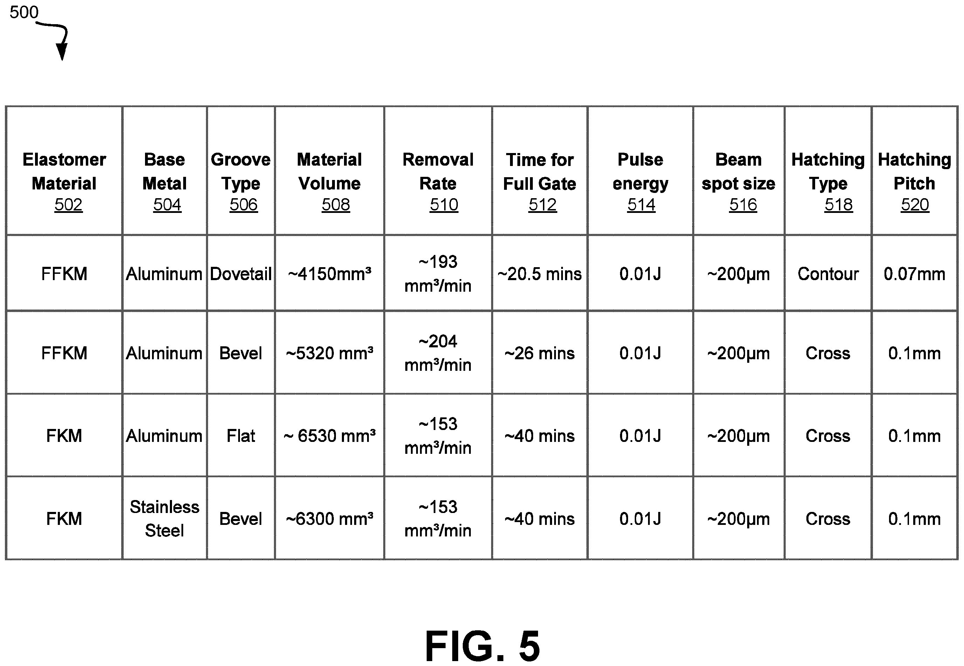

**FIG. 5** is a table 500 showing example laser system parameters used to remove elastomer materials, in accordance with some embodiments. The table 500 includes columns 502-520. Column 502 corresponds to elastomer material. Column 504 corresponds to the base metal of a target surface of a gate structure having a groove in which the elastomer material is formed ("base metal"). Column 506 corresponds to the type of groove in which the elastomer material is formed ("groove type"). Column 508 corresponds to the volume of the elastomer material ("material volume"). Column 510 corresponds to the rate of removal of the elastomer material from the target surface ("removal rate"). Column 512 corresponds to the amount of time it takes to fully remove the elastomer material from a gate structure ("time for full gate"). Column 514 corresponds to the pulse energy of the laser of the elastomer removal system ("pulse energy"). Column 516 corresponds to the size of the beam spot generated by the elastomer removal system ("beam spot size"). Column 518 corresponds to the hatching type implemented by the elastomer removal system ("hatching type"). Column 520 corresponds to the hatching pitch implemented by the elastomer removal system ("hatching pitch"). The table 500 shows specific example values for each of the indicated parameters. In some embodiments, one or more of the indicated values may be used plus or minus 10%. In some embodiments, one or more of the indicated values may be used plus or minus 25%. In some embodiments, one or more of the indicated values may be used, plus or minus 5%. In some embodiments, one or more of the indicated values may be used, plus or minus 15%. In some embodiments, one or more of the indicated values may be used, plus or minus 20%. In some embodiments, one or more of the indicated values may be used, plus or minus 30%. In some embodiments, the terms about and approximately may include a given value plus or minus up to 30%.

As shown in **FIG. 5****,** the first row of the table 500 indicates that the elastomer material is a perfluoroelastomer (FFKM), the base metal is aluminum, the groove type is dovetail, the material volume is approximately 4150 cubic millimeters (mm³), the removal rate is about 193 mm³/minute (min), the time for full gate is about 20.5 mins, the pulse energy is about 0.01 Joule (J), the beam spot size is about 200 micrometers (µm), the hatching type is contour, and the hatching pitch is 0.07 mm.

The second row of the table 500 indicates that the elastomer material is an FFKM, the base metal is aluminum, the groove type is bevel, the material volume is approximately 5320 mm³, the removal rate is about 204 mm³/min, the time for full gate is about 26 mins, the pulse energy is about 0.01 J, the beam spot size is about 200 µm, the hatching type is cross, and the hatching pitch is 0.1 mm.

The third row of the table 500 indicates that the elastomer material is a fluoroelastomer (FKM), the base metal is aluminum, the groove type is flat, the material volume is approximately 6530 mm³, the removal rate is about 153 mm³/min, the time for full gate is about 40 mins, the pulse energy is about 0.01 J, the beam spot size is about 200 µm, the hatching type is cross, and the hatching pitch is 0.1 mm.

The fourth row of the table 500 indicates that the elastomer material is an FKM, the base metal is stainless steel, the groove type is bevel, the material volume is approximately 6300 mm³, the removal rate is about 153 mm³/min, the time for full gate is about 40 mins, the pulse energy is about 0.01 J, the beam spot size is about 200 µm, the hatching type is cross, and the hatching pitch is 0.1 mm.

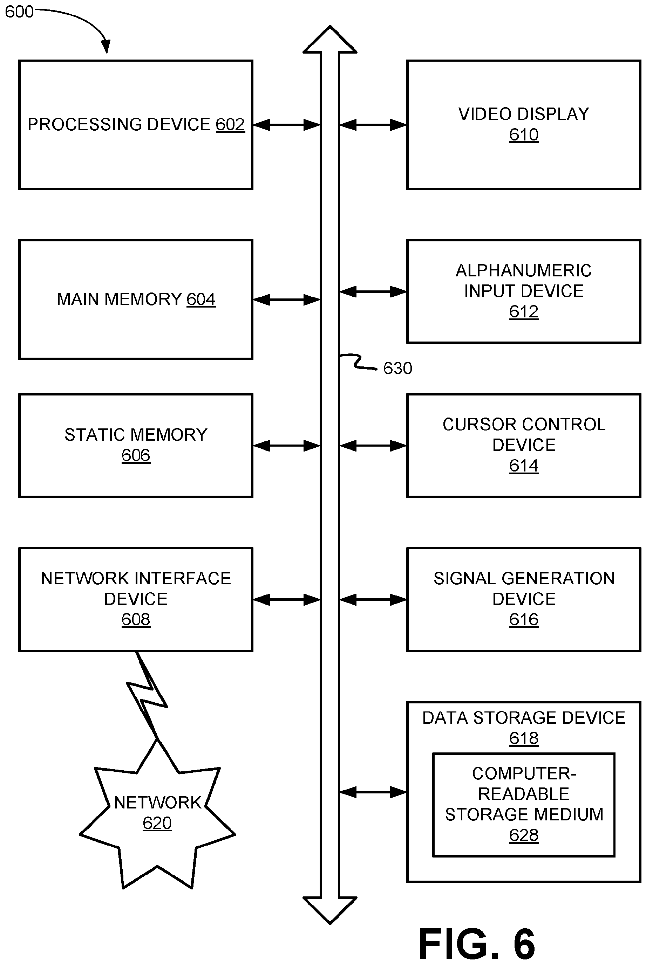

**FIG. 6** illustrates a diagrammatic representation of an example computer system 600, which may be employed for implementing the methods described herein. The computer system 600 may be connected to other computing devices in a LAN, an intranet, an extranet, and/or the Internet. Computer system 600 may operate in the capacity of a server machine in a client-server network environment. Computer system 600 may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computer system" shall also be taken to include any collection of computing devices that individually or jointly execute a set (or multiple sets) of instructions to perform the methods discussed herein. In illustrative examples, computer system 600 may represent set of control systems 220 of **FIG. 2****.**

Computer system 600 may include processing device 602, main memory 604 (e.g., synchronous dynamic random access memory (DRAM), read-only memory (ROM)), and static memory 605 (e.g., flash memory and data storage device 618), which may communicate with each other via bus 630.

Processing device 602 may be provided by one or more general-purpose processing devices such as a microprocessor, central processing unit, or the like. In an illustrative example, processing device 602 may comprise a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 602 may also comprise one or more special-purpose processing devices such as an application specific integrated circuit (ASIC), a field programmable gate array (FPGA), a digital signal processor (DSP), a network processor, or the like. Processing device 602 may be configured to execute methods of managing computing systems, in accordance with one or more aspects of the present disclosure.

Computer system 600 may further include network interface device 608, which may communicate with network 620. Computer system 600 also may include video display unit 610 (e.g., a liquid crystal display (LCD) or a cathode ray tube (CRT)), alphanumeric input device 612 (e.g., a keyboard), cursor control device 614 (e.g., a mouse) and/or acoustic signal generation device 615 (e.g., a speaker). In one embodiment, video display unit 610, alphanumeric input device 612, and cursor control device 614 may be combined into a single component or device (e.g., an LCD touch screen).

Data storage device 618 may include computer-readable storage medium 628 on which may be stored one or more sets of instructions (e.g., instructions of the methods of automated review of communications, in accordance with one or more aspects of the present disclosure) implementing any one or more of the methods or functions described herein. The instructions may also reside, completely or at least partially, within main memory 604 and/or within processing device 602 during execution thereof by computer system 600, main memory 604 and processing device 602 also constituting computer-readable media. The instructions may further be transmitted or received over network 620 via network interface device 608.

While computer-readable storage medium 628 is shown in an illustrative example to be a single medium, the term "computer-readable storage medium" shall be taken to include a single medium or multiple media (e.g., a centralized or distributed database and/or associated caches and servers) that store one or more sets of instructions. The term "computer-readable storage medium" shall also be taken to include any medium that is capable of storing, encoding or carrying a set of instructions for execution by the machine and that causes the machine to perform the methods described herein. The term "computer-readable storage medium" shall accordingly be taken to include, but not be limited to, solid-state memories, optical media and magnetic media.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. The present disclosure can refer to the action and processes of a computer system, or similar electronic computing device, that manipulates and transforms data represented as physical (electronic) quantities within the computer system's registers and memories into other data similarly represented as physical quantities within the computer system memories or registers or other such information storage systems.

The present disclosure also relates to an apparatus for performing the operations herein. This apparatus can be specially constructed for the intended purposes, or it can include a general purpose computer selectively activated or reconfigured by a computer program stored in the computer. Such a computer program can be stored in a computer readable storage medium, such as any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computer system bus.

The algorithms and displays presented herein are not inherently related to any particular computer or other apparatus. Various general purpose systems can be used with programs in accordance with the teachings herein, or it can prove convenient to construct a more specialized apparatus to perform the method. The structure for a variety of these systems will appear as set forth in the description below. In addition, the present disclosure is not described with reference to any particular programming language. It will be appreciated that a variety of programming languages can be used to implement the teachings of the disclosure as described herein.

The present disclosure can be provided as a computer program product, or software, that can include a machine-readable medium having stored thereon instructions, which can be used to program a computer system (or other electronic devices) to perform a process according to the present disclosure. A machine-readable medium includes any mechanism for storing information in a form readable by a machine (e.g., a computer). In some implementations, a machine-readable (e.g., computer-readable) medium includes a machine (e.g., a computer) readable storage medium such as a read only memory ("ROM"), random access memory ("RAM"), magnetic disk storage media, optical storage media, flash memory components, etc.

The preceding description sets forth numerous specific details such as examples of specific systems, components, methods, and so forth, in order to provide a good understanding of several embodiments of the present disclosure. It will be apparent to one skilled in the art, however, that at least some embodiments of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular implementations may vary from these exemplary details and still be contemplated to be within the scope of the present disclosure.

Reference throughout this specification to "one embodiment" or "an embodiment" means that a particular feature, structure, or characteristic described in connection with the embodiment is included in at least one embodiment. Thus, the appearances of the phrase "in one embodiment" or "in an embodiment" in various places throughout this specification are not necessarily all referring to the same embodiment. In addition, the term "or" is intended to mean an inclusive "or" rather than an exclusive "or." When the term "about" or "approximately" is used herein, this is intended to mean that the nominal value presented is precise within ±10%.

Although the operations of the methods herein are shown and described in a particular order, the order of the operations of each method may be altered so that certain operations may be performed in an inverse order or so that certain operation may be performed, at least in part, concurrently with other operations. In another embodiment, instructions or sub-operations of distinct operations may be in an intermittent and/or alternating manner.

It is to be understood that the above description is intended to be illustrative, and not restrictive. Many other embodiments will be apparent to those of skill in the art upon reading and understanding the above description. The scope of the disclosure should, therefore, be determined with reference to the appended claims, along with the full scope of equivalents to which such claims are entitled.

## Claims

1. A method, comprising:
initializing, by at least one processing device, a set of parameters of an elastomer removal system for removing at least a portion of an elastomer material from a target surface, wherein the elastomer removal system comprises laser generation system comprising a carbon dioxide (CO₂) laser; and
causing, by the at least one processing device, the elastomer removal system to remove at least a portion of the elastomer material from the target surface in accordance with the set of parameters.

2. The method of claim 1, wherein target surface is a surface of a gate structure of a slit valve associated with a processing chamber.

3. The method of claim 1, wherein the elastomer removal system further comprises a laser scanning system, and wherein causing the elastomer removal system to remove at least a portion of the elastomer material from the target surface in accordance with the set of parameters further comprises causing the laser generation system to generate a laser beam in accordance with the set of parameters, and causing the laser scanning system to use the laser beam to generate a beam spot incident on the target surface in accordance with the set of parameters.

4. The method of claim 1, wherein causing the elastomer removal system to remove at least a portion of the elastomer material from the target surface in accordance with the set of parameters comprises causing the elastomer removal system to remove excess elastomer material from the target surface.

5. The method of claim 1, wherein the elastomer material corresponds to a sealing structure formed within a groove, and wherein causing the elastomer removal system to remove the elastomer material from the target surface in accordance with the set of parameters comprises causing the elastomer removal system to remove a portion of the sealing structure from the groove.

6. The method of claim 1, wherein the elastomer material corresponds to a sealing structure formed within a groove, and wherein causing the elastomer removal system to remove the elastomer material from the target surface in accordance with the set of parameters comprises causing the elastomer removal system to remove an entirety of the sealing structure from the groove.

7. The method of claim 1, further comprising causing, by the at least one processing device, new elastomer material to be formed on the target surface.

8. A system comprising:
a memory; and
at least one processing device, processing device, operatively coupled to the memory, configured to execute a method according to any of claims 1 to 7:
initialize a set of parameters of an elastomer removal system for removing at least a portion of an elastomer material from a target surface, wherein the elastomer removal system comprises laser generation system comprising a carbon dioxide (CO₂) laser; and
cause the elastomer removal system to remove at least the portion of the elastomer material from the target surface in accordance with the set of parameters.

9. An elastomer removal system comprising:
a laser generation system comprising a carbon dioxide (CO₂) laser;
a laser scanning system; and
at least one control system, the at least one control system comprising at least one processing device, operatively coupled to a memory, configured to:
initialize a set of parameters associated with the laser generation system and the laser scanning system for removing at least a portion of elastomer material from a target surface;
cause the laser generation system to generate a laser beam in accordance with the set of parameters; and
cause the laser scanning system to use the laser beam to generate a beam spot to remove at least the portion of the elastomer material from the target surface in accordance with the set of parameters.

10. The elastomer removal system of claim 9, wherein target surface is a surface of a gate structure of a slit valve associated with a processing chamber.

11. The elastomer removal system of claim 9, wherein, to cause the elastomer removal system to remove the elastomer material from the target surface in accordance with the set of parameters, the at least one processing device is to cause the elastomer removal system to remove excess elastomer material from the target surface.

12. The elastomer removal system of claim 9, wherein the elastomer material corresponds to a sealing structure formed within a groove, and wherein, to cause the elastomer removal system to remove the elastomer material from the target surface in accordance with the set of parameters, the at least one control system is to cause the elastomer removal system to remove a portion of the sealing structure from the groove.

13. The elastomer removal system of claim 9, wherein the elastomer material corresponds to a sealing structure formed within a groove, and wherein, to cause the elastomer removal system to remove the elastomer material from the target surface in accordance with the set of parameters, the at least one control system is to cause the elastomer removal system to remove an entirety of the sealing structure from the groove.

14. The elastomer removal system of claim 9, wherein the at least one control system is further to cause new elastomer material to be formed on the target surface.
